(19) Europäisches Patentamt
European Patent Office
Office européen des brevets

(11) **EP 3 287 488 B1**

(12) **EUROPEAN PATENT SPECIFICATION**

(45) Date of publication and mention
of the grant of the patent:
**27.10.2021 Bulletin 2021/43**

(51) Int Cl.:
***C08L 23/20*** *(2006.01)*    ***C08L 23/04*** *(2006.01)*
***C08L 23/22*** *(2006.01)*

(21) Application number: **16783070.2**

(22) Date of filing: **13.04.2016**

(86) International application number:
**PCT/JP2016/061860**

(87) International publication number:
**WO 2016/171049 (27.10.2016 Gazette 2016/43)**

(54) **POLY(1-BUTENE) RESIN COMPOSITION AND MOLDED OBJECT OBTAINED THEREFROM**

POLY(1-BUTEN)-HARZZUSAMMENSETZUNG UND DARAUS HERGESTELLTER FORMKÖRPER

COMPOSITION DE RÉSINE DE POLY(1-BUTÈNE) ET OBJET MOULÉ OBTENU À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2015 JP 2015087368**

(43) Date of publication of application:
**28.02.2018 Bulletin 2018/09**

(73) Proprietor: **Mitsui Chemicals, Inc.**
**Minato-ku**
**Tokyo 105-7122 (JP)**

(72) Inventors:
• **TOKUI, Shin**
**Ichihara-shi**
**Chiba 299-0108 (JP)**
• **MATSUNAGA, Koji**
**Ichihara-shi**
**Chiba 299-0108 (JP)**
• **KAWABE, Kuniaki**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 125 981        EP-A1- 1 219 645**
**EP-A2- 0 476 660        JP-A- 2002 241 553**
**JP-A- 2002 256 024      JP-A- 2003 041 076**
**JP-A- 2008 179 687**

**Description**

Technical Field

The present invention relates to a poly(1-butene) resin composition having specific formulation and having specific properties and a molded body formed from the resin composition.

Background Art

A polybutene resin is used for water and hot water supply pipes by making the best use of its good high-temperature creep characteristics and flexibility.

The polybutene resin, however, has a low hardening rate when it is a molten resin, and therefore, unless a crystal nucleating agent is added to increase the hardening rate, good moldability cannot be obtained. As a substance having a high nucleating agent effect, an ethylene-based (co)polymer is known. In particular, polyethylene wax has a high nucleating agent effect and is an extremely useful nucleating agent capable of ensuring pressure-resistance strength at high temperatures. However, in order to obtain high pressure-resistance strength, it is necessary to increase the amount added, and there is a problem of bringing about a decrease in creep strength.

As other nucleating agents, carboxylic acid amide compounds such as EBSA (ethylenebis(stearic acid amide)) can be mentioned. EBSA has a high nucleating agent effect and is an extremely useful nucleating agent capable of ensuring pressure-resistance strength at high temperatures, but its half-crystallization time is excessively shortened, and there is a problem of bringing about lowering of dimensional accuracy. Moreover, in order to ensure design properties and light blocking properties, the polybutene resin for water and hot water supply pipes is colored white, gray, beige or the like in many cases, but titanium oxide that is a base of a color pigment exerts an effect of further shortening the half-crystallization time when it is combined with EBSA, and as a result, further lowering of dimensional accuracy is brought about (for example, patent literature 1).

Furthermore, polybutene resin compositions comprising an homopolyethylene obtained by using a Ziegler-type catalyst have been described (patent literature 2).

Citation List

Patent Literature

Patent literature 1: Japanese Unexamined Patent Application Publication No. 2007-186563
Patent literature 2: European Patent Application No. EP 1 125 981 A1

Summary of Invention

Technical Problem

In the light of the above-described background art, the present invention addresses the problem of providing a poly (1-butene) resin composition having a long half-crystallization time and being able to favorably form a molded body having an excellent balance between strength and moldability.

Solution to Problem

In order to solve the above problem, the present inventors have earnestly studied. As a result, the present inventors have found that the above problem can be solved by using a poly (1-butene) resin composition having specific formulation and specific properties, and they have completed the present invention.

That is to say, the poly(1-butene) resin composition of the present invention contains

a poly (1-butene) resin (A) (also referred to as a "resin (A) " in the present invention) having a melt flow rate, as measured at 190°C under a load of 2.16 kg in accordance with JIS K 6721, of 0.01 to 50 g/10 min, and
an ethylene-based polymer (B) (also referred to as a "polymer (B)" in the present invention) satisfying the following requirements (i) to (iii) and (viii), and
satisfies the following requirements (I) and (II),

(i) a mass-average molecular weight (Mw) as measured by gel permeation chromatography (GPC) is in the range of 3000 to 9000 in terms of polyethylene,

(ii) a ratio (Mw/Mn) of a mass-average molecular weight (Mw) as measured by gel permeation chromatography (GPC) to a number-average molecular weight (Mn) as measured by the same is in the range of 1.0 to 3.5,

(iii) a density d as measured by a density gradient tube method in accordance with JIS K 7112 is in the range of 890 to 980 kg/m$^3$,

(viii) the ethylene-based polymer (B) is a polymer obtained by using a metallocene catalyst,

(I) a content (% by mass) [$W_A$] of the poly(1-butene) resin (A) is 95.000 to 99.999, and a content (% by mass) [$W_B$] of the ethylene-based polymer (B) is 0.001 to 5.000 (with the proviso that the total of $W_A$ and $W_B$ is 100% by mass),

(II) a half-crystallization time $T_{1/2}$ (second(s)) of the poly(1-butene) resin composition at an isothermal crystallization temperature 90°C, as determined by differential scanning calorimeter (DSC) measurement, a density d (kg/m$^3$) of the ethylene-based polymer (B), and a content (% by mass) [$W_B$] of the ethylene-based polymer (B) satisfy a relationship represented by the following formula (1):

$$T_{1/2} > (0.27 \times W_B - 1.34) \times d - 274 \times W_B + 1389 \quad \text{Formula (1)}.$$

The polymer (B) preferably further satisfies the following requirement (iv):
(iv) a melting point (Tm) as obtained by differential scanning calorimeter (DSC) measurement is in the range of 70 to 130°C.
The polymer (B) preferably further satisfies the following requirement (v):

(v) the polymer (B) is a homopolymer of ethylene.
The polymer (B) preferably further satisfies the following requirement (vii):
(vii) the polymer (B) satisfies a relationship represented by the following formula (3):

$$A \leq 230 \times K^{(-0.537)} \quad \text{Formula (3)}$$

(in the formula (3), A represents a content (% by mass), on the mass basis, of a component in the ethylene-based polymer (B), the component having a molecular weight, as measured by gel permeation chromatography (GPC), of not more than 1,000 in terms of polyethylene, and K represents a melt viscosity (mPa·s) of the ethylene-based polymer (B) at 140°C).
The polymer (B) preferably further satisfies the following requirement (ix):
(ix) an ash content obtained by completely burning the polymer (B) in air is not more than 45 ppm.
The ratio (Mw/Mn) of the mass-average molecular weight to the number-average molecular weight in the requirement (ii) is preferably in the range of 1.2 to 3.5.
The molded body of the present invention is obtained from the poly(1-butene) resin composition.
The molded body is preferably a pipe or a pipe joint.

Advantageous Effects of Invention

According to the present invention, a poly(1-butene) resin composition having a long half-crystallization time and being able to favorably form a molded body having an excellent balance between strength and moldability, and a molded body can be provided.

Brief Description of Drawings

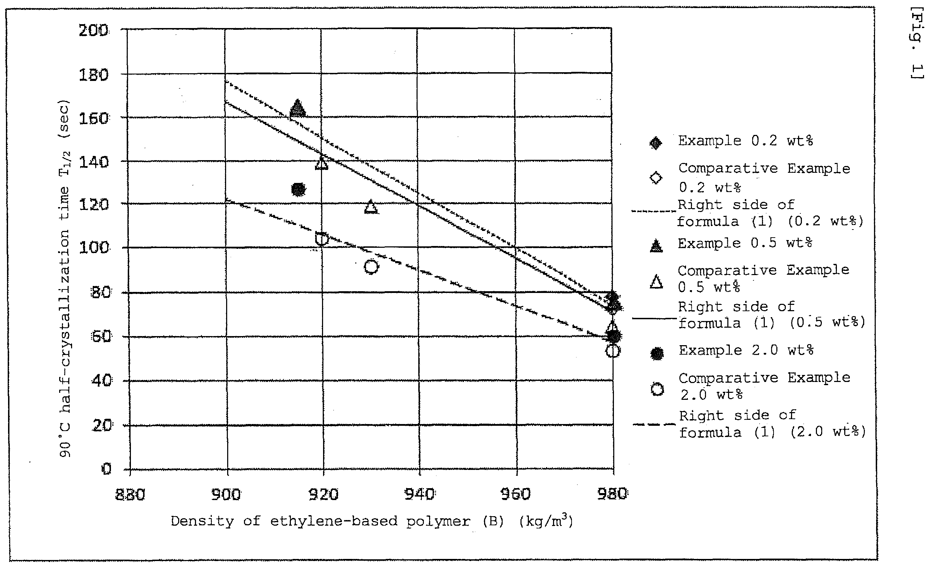

[Fig. 1] Fig. 1 is a view in which the density (kg/m$^3$) of the ethylene-based polymer (B) is set on the abscissa, the half-crystallization time $T_{1/2}$ (second(s)) of the poly (1-butene) resin composition at an isothermal crystallization temperature 90°C, as determined by differential scanning calorimeter (DSC) measurement, is set on the ordinate, Examples and Comparative Examples described in the present specification are plotted, and in addition, lines each corresponding to the right side of the formula (1) in the case where $W_B$ is 0.2, 0.5 or 2.0 (% by mass) are shown.

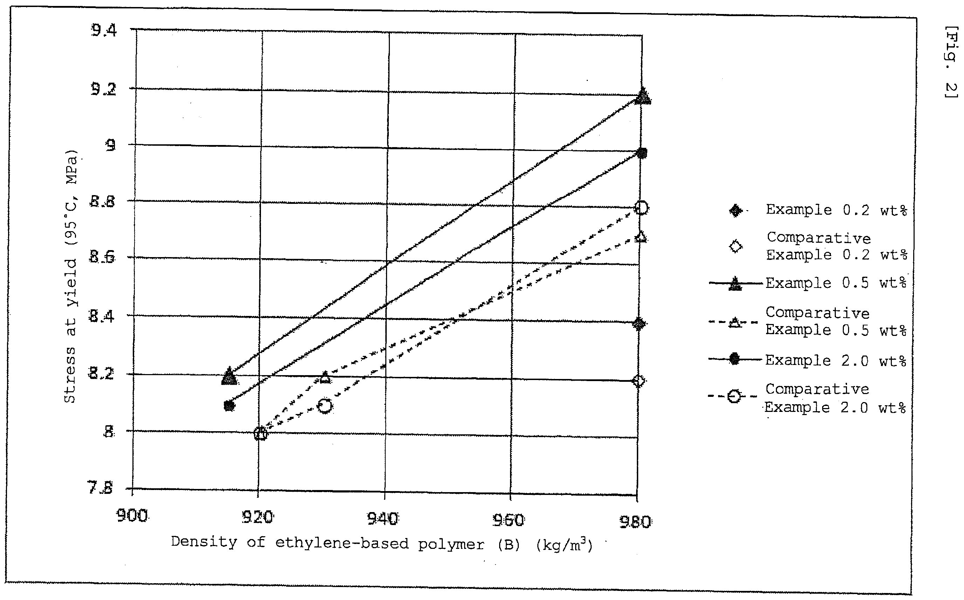

[Fig. 2] Fig. 2 is a view in which the density (kg/m$^3$) of the ethylene-based polymer (B) is set on the abscissa, the stress at yield (95°C, MPa) of a pressed sheet obtained by using the poly (1-butene) resin composition is set on the ordinate, and Examples and Comparative Examples described in the present specification are plotted.

Description of Embodiments

Hereinafter, the poly(1-butene) resin composition of the present invention, a molded body formed from the composition, and their preferred embodiments are described in detail.

[Poly(1-butene) resin composition]

The poly(1-butene) resin composition of the present invention contains a specific poly(1-butene) resin (A) and a specific ethylene-based polymer (B) in specific amounts, and satisfies the requirements (I) and (II).
The components and the requirements are described below.

[Poly(1-butene) resin (A)]

The resin (A) usually has a melt flow rate, as measured at 190°C under a load of 2.16 kg in accordance with JIS K 6721, of 0.01 to 50 g/10 min, and preferably 0.03 to 10 g/10 min.
A melt flow rate exceeding the above upper limit is undesirable because mechanical strength of the resulting resin composition may be deteriorated, and a melt flow rate less than the above lower limit is undesirable because fluidity of the resulting resin composition during molding may be deteriorated.
The melt flow rate of the resin (A) can be controlled by using hydrogen in the polymerization system when the resin (A) is produced. Further, a resin having a melt flow rate in the above range, which is appropriately selected from commercial poly (1-butene) resins, can be used.
The melting point (Tm) of the resin (A) as determined by DSC (differential scanning calorimetry) is not specifically restricted as long as the effect of the present invention is exerted, but it is usually 50 to 140°C, preferably 60 to 140°C, more preferably 60 to 130°C, and still more preferably 70 to 130°C. A melting point (Tm) in the above range is preferable because the resulting resin composition has excellent strength.
In the resin (A), a content of structural units derived from 1-butene is 60 to 100% by mol, and a total content (K) of structural units derived from ethylene and at least one olefin selected from $\alpha$-olefins having 3 to 20 carbon atoms other than 1-butene is 0 to 40% by mol (with the proviso that the total of the content of structural units derived from 1-butene and the total content (K) is 100% by mol). In the resin (A), it is preferable that the content of structural units derived from 1-butene is 80 to 100% by mol and the total content (K) is 0 to 20% by mol, and it is more preferable that the content of structural units derived from 1-butene is 90 to 100% by mol and the total content (K) is 0 to 10% by mol, with the proviso that the total of the content of structural units derived from 1-butene and the total content (K) is 100% by mol.
In the present invention, a poly(1-butene) homopolymer is preferable as the poly(1-butene) resin (A) from the viewpoint of strength of the resulting resin composition.
In this specification, "ethylene" and "a-olefins having 3 to 20 carbon atoms other than 1-butene" are also referred to as "comonomers". The comonomers may be used singly or in combination of two or more kinds. The total content (K) is a total content of structural units derived from comonomers. When the poly(1-butene) resin contains structural units derived from comonomers, the structural units may be those derived from one comonomer or may be those derived from two or more comonomers.
Comonomer composition is measured by $^{13}$C-NMR.
Examples of the $\alpha$-olefins having 3 to 20 carbon atoms other than 1-butene include propylene, 1-pentene, 3-methyl-1-butene, 1-hexene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, 3-ethyl-1-hexene, 1-octene, 1-decene, 1-dodecene, 1-tetradecene, 1-hexadecene, 1-octadecene and 1-eicosene.
Of these, propylene, 3-methyl-1-butene, 1-hexene, 3-methyl-1-pentene, 1-octene, 1-decene, 1-dodecene, 1-tetradecene, 1-hexadecene and 1-octadecene are preferable.
Of these, $\alpha$-olefins having 3 to 10 carbon atoms other than 1-butene are more preferable, and propylene is particularly preferable. The $\alpha$-olefins may be used singly, or may be used in combination of two or more kinds.
The poly (1-butene) resin may have structural units derived from other monomers than ethylene and $\alpha$-olefins having 3 to 20 carbon atoms as long as the effect of the present invention is exerted. The upper limit of the content of structural units derived from other monomers is, for example, 5 moles based on 100 moles of the total of the content of structural units derived from 1-butene and the total content (K).
The poly(1-butene) resin may have been graft-modified with a polar monomer as long as the effect of the present invention is exerted. Details of the graft modification will be described later in the section of (Graft modification).

(Production process for poly(1-butene) resin (A))

The resin (A) can be produced by a hitherto known production process such as a process including polymerizing 1-butene only or copolymerizing 1-butene and the above-described comonomer, in the presence of a Ziegler-Natta catalyst or a metallocene catalyst. Such a production process for a homopolymer of poly(1-butene) or a poly(1-butene)-based copolymer is described in, for example, WO 02/02659.

Furthermore, commercial poly(1-butene) such as BEAULON (registered trademark) manufactured by Mitsui Chemicals, Inc. can also be used.

[Ethylene-based polymer (B)]

The polymer (B) is a homopolymer of ethylene or a random or block copolymer of ethylene and an $\alpha$-olefin having 3 to 20 carbon atoms, and contains structural units derived from ethylene usually in amounts of not less than 50% by mol, preferably not less than 60% by mol, and more preferably 80% by mol, in 100% by mol of the total of structural units derived from ethylene and structural units derived from an $\alpha$-olefin having 3 to 20 carbon atoms. When the ethylene-based polymer is a homopolymer, the resulting resin composition has an excellent balance between strength and moldability. On the other hand, in the case of a random copolymer of ethylene and an $\alpha$-olefin having 3 to 20 carbon atoms, the $\alpha$-olefin having 3 to 20 carbon atoms is preferably an $\alpha$-olefin having 3 to 10 carbon atoms, and more preferably an $\alpha$-olefin having 3 to 8 carbon atoms. Specific examples of such $\alpha$-olefins include propylene, 1-butene, 1-hexene, 4-methyl-1-pentene and 1-octene. Of these, 1-butene is particularly preferable as the $\alpha$-olefin. When 1-butene is copolymerized, the resulting poly(1-butene) resin has a half-crystallization time of a proper length and exhibits excellent dimensional accuracy in a high-speed molding process for pipes, as compared with a case where other $\alpha$-olefins are copolymerized. In addition, since 1-butene efficiently lowers the melting point of the polymer (B) even by copolymerization of a small amount of 1-butene, the amount of a tacky component is decreased as compared with a case of the same melting point, and as a result, the resulting resin composition has an excellent balance between moldability and strength. The $\alpha$-olefins may be used singly, or may be used in combination of two or more kinds.

The polymer (B) may be composed of one kind of an ethylene homopolymer or one kind of an ethylene/$\alpha$-olefin copolymer, or may be composed of a mixture of two or more kinds selected from ethylene homopolymers and ethylene/$\alpha$-olefin copolymers, such as a mixture of two or more kinds of ethylene homopolymers, a mixture of an ethylene homopolymer and an ethylene/$\alpha$-olefin copolymer, or a mixture of two or more kinds of ethylene/$\alpha$-olefin copolymers.

The polymer (B) satisfies the requirements (i) to (iii) and (viii), preferably satisfies, in addition to these requirements, at least one requirement selected from the requirements (iv) to (vii), more preferably satisfies, in addition to these requirements, at least one requirement selected from the requirements (iv) to (ix), and still more preferably satisfies all the requirements (i) to (ix).

Next, the requirements are described.

·Requirement (i)

The mass-average molecular weight (Mw) as measured by gel permeation chromatography (GPC) is in the range of 3000 to 9000, preferably in the range of 4000 to 8000, more preferably in the range of 5000 to 7000, and particularly preferably in the range of 6000 to 7000, in terms of polyethylene. When the mass-average molecular weight (Mw) is in the above range, the resulting resin composition is excellent in balance between strength and moldability.

The mass-average molecular weight (Mw) can be measured by GPC. The GPC measurement can be carried out under, for example, the conditions described in Examples. The mass-average molecular weight (Mw) and a number-average molecular weight (Mn) described later can be determined by making a calibration curve using commercial monodisperse standard polystyrene and carrying out PE (polyethylene) conversion on the basis of a universal calibration method such as a conversion method described in Examples. In the calculation of the universal calibration method, a coefficient of Mark-Houwink viscosity equation can be used. As the Mark-Houwink coefficients of PS and PE, values described in literatures of J. Polym. Sci., Part A-2, 8, 1803 (1970) and Makromol. Chem., 177, 213 (1976) can be used, respectively.

·Requirement (ii)

The ratio (Mw/Mn) of a mass-average molecular weight (Mw) as measured by gel permeation chromatography (GPC) to a number-average molecular weight (Mn) as measured by the same is in the range of 1.0 to 3.5. The lower limit is preferably 1.2, more preferably 2.0, and particularly preferably 2.7. The upper limit is preferably 3.3, and more preferably 2.9. When Mw/Mn is in the above range, the resulting resin composition is excellent in balance between strength and moldability.

·Requirement (iii)

The density d as measured by a density gradient tube method in accordance with JIS K 7112 is in the range of 890 to 980 (kg/m$^3$), preferably 900 to 980 (kg/m$^3$), more preferably 910 to 980 (kg/m$^3$), and particularly preferably 940 to 980 (kg/m$^3$). When the density is in the above range, the resulting resin composition is excellent in balance between strength and moldability.

·Requirement (iv)

The melting point (Tm) as obtained by differential scanning calorimeter (DSC) measurement is not specifically restricted as long as the effect of the present invention is exerted, but it is preferably in the range of 70 to 130 (°C), more preferably 90 to 130 (°C), still more preferably 100 to 130 (°C), and particularly preferably 115 to 128 (°C). When the melting point (Tm) is in the above range, the resulting resin composition is excellent in balance between strength and moldability.

·Requirement (v)

The polymer (B) is preferably a homopolymer of ethylene because the resulting resin composition is excellent in balance between strength and moldability.

·Requirement (vi)

The polymer (B) satisfies a relationship represented by the following formula (2):

$$B \leq 0.15 \times K \qquad \text{Formula (2)}$$

(in the formula (2), B represents a content (% by mass), on the mass basis, of a component in the polymer (B), the component having a molecular weight, as measured by gel permeation chromatography (GPC), of not less than 20,000 in terms of polyethylene, and K represents a melt viscosity (mPa·s) of the polymer (B) at 140°C). As K, a value measured by a Brookfield (B type) viscometer is used.

Satisfying the condition of the formula (2) indicates that the amount of an extremely high-molecular weight component is small. On that account, deterioration of miscibility in the resulting resin composition is suppressed, and hence, satisfying the above condition is preferable.

The polymer (B) having a B value in the above range can be prepared preferably by the use of a metallocene catalyst. Of metallocene catalysts, a metallocene catalyst having a non-crosslinked ligand is preferable. Examples of such metallocene catalysts include metallocene compounds described later.

The B value can be controlled also by a polymerization temperature. For example, when the polymer (B) is produced by using a metallocene catalyst described later, the polymerization temperature is usually in the range of 100 to 200°C, but from the viewpoint of production of the polymer (B) having the aforesaid B value, the polymerization temperature is preferably in the range of 100 to 180°C, and more preferably in the range of 100 to 170°C.

·Requirement (vii)

The polymer (B) satisfies a relationship represented by the following formula (3):

$$A \leq 230 \times K^{(-0.537)} \qquad \text{Formula (3)}$$

(in the formula (3), A represents a content (% by mass), on the mass basis, of a component in the polymer (B), the component having a molecular weight, as measured by gel permeation chromatography (GPC), of not more than 1,000 in terms of polyethylene, and K represents a melt viscosity (mPa·s) of the polymer (B) at 140°C). As K, a value measured by a Brookfield (B type) viscometer is used.

Satisfying the formula (3) indicates that the content of a component having a molecular weight of not more than 1,000 is set to a certain value or smaller with regard to a relationship to the melt viscosity, and is preferable from the viewpoints of strength and moldability of the resulting resin composition.

The polymer (B) having an A value in the above range can be prepared preferably by the use of a metallocene catalyst. Of metallocene catalysts, a metallocene catalyst having a non-crosslinked ligand is preferable. Examples of such metallocene catalysts include metallocene compounds described later.

The A value can be controlled also by a polymerization temperature. For example, when the polymer (B) is produced by using a metallocene catalyst described later, the polymerization temperature is usually in the range of 100 to 200°C, but from the viewpoint of production of the polymer (B) having the aforesaid A value, the polymerization temperature is preferably in the range of 100 to 180°C, and more preferably in the range of 100 to 170°C.

·Requirement (viii)

The polymer (B) is a polymer produced by using a metallocene catalyst.

·Requirement (ix)

The ash content obtained by completely burning the polymer (B) in air is not specifically restricted as long as the effect of the present invention is exerted, but it is preferably not more than 45 ppm. An ash content in the above range is preferable because the resulting resin composition is excellent in balance between strength and moldability. Taking the effect of the present invention into consideration, it is preferable that no ash remains in the polymer (B), and the most preferred lower limit of the ash content is 0 ppm. In the present invention, however, taking the production technique and the cost into consideration, ash may remain as long as the effect of the present invention is exerted, and the lower limit of the ash content is usually 5 ppm, preferably 10 ppm, and more preferably 20 ppm.

(Production process for ethylene-based polymer (B))

The polymer (B) according to the present invention may be a polymer obtained by directly polymerizing ethylene or ethylene and an $\alpha$-olefin, or may be a polymer obtained by thermally decomposing a high-molecular weight ethylene-based polymer. Furthermore, the polymer (B) may have been purified by solvent fractionation for fractionating the polymer utilizing a difference in solubility in a solvent, distillation or the like. Moreover, the polymer (B) may be a polymer composed of one kind of an ethylene/$\alpha$-olefin copolymer, or may be a polymer obtained by mixing two or more kinds of ethylene/$\alpha$-olefin copolymers.

When the polymer (B) according to the present invention is obtained by direct lypolymerizing ethylene or ethylene and an $\alpha$-olefin, the polymer (B) can be produced by a variety of known production processes, such as a production process in which ethylene or ethylene and an $\alpha$-olefin having 3 to 20 carbon atoms are polymerized using a Ziegler-Natta catalyst or a metallocence catalyst.

In the present invention, polymerization for the polymer (B) can be carried out by, for example, a suspension polymerization method in which polymerization is carried out in a state where a monomer to be polymerized and the polymer (B) produced are present as particles in an inert hydrocarbon medium such as hexane, a gas phase polymerization method in which polymerization is carried out without using a solvent, a solution polymerization method in which polymerization is carried out in a state where a monomer to be polymerized and the polymer (B) produced are melted in the presence of an inert hydrocarbon medium or melted alone. Of such methods, solution polymerization is preferable from the viewpoints of both economy and quality. The polymerization reaction may be carried out by any of a batch process and a continuous process. The polymerization may be carried out in two or more stages different in reaction conditions.

Examples of the inert hydrocarbon media used in the suspension polymerization method and the solution polymerization method include aliphatic hydrocarbons, such as propane, butane, pentane, hexane, heptane, octane, decane, dodecane and kerosene; alicyclic hydrocarbons, such as cyclopentane, cyclohexane and methylcyclopentane; aromatic hydrocarbons, such as benzene, toluene and xylene; and halogenated hydrocarbons, such as ethylene chloride, chlorobenzene and dichloromethane. The inert hydrocarbon media may be used singly, or may be used as a mixture of two or more kinds. A method of using a liquefied $\alpha$-olefin itself that can be fed for the polymerization, a so-called bulk polymerization method, is also employable.

The catalyst is a metallocene catalyst. As the metallocene catalyst, for example, a catalyst comprising

(a) a metallocene compound of a transition metal selected from the group 4 of the periodic table, and
(b) at least one compound selected from

(b-1) an organoaluminum oxy-compound,
(b-2) a compound which reacts with the metallocene compound to form an ion pair (also referred to as an "ionizing ionic compound" hereinafter), and

(b-3) an organoalunimum compound

is preferably used (see Japanese Unexamined Patent Application Publication No. 1996-239414 and WO 2007/114102).

Examples of the metallocene compounds (a) of a transition metal selected from the group 4 of the periodic table include metallocene compounds described in Japanese Unexamined Patent Application Publication No. 1996-239414 and WO 2007/114102.

As the organoaluminum oxy-compound (b-1), hitherto known aluminoxane can be used as it is. Examples of such compounds include organoaluminum oxy-compounds described in Japanese Unexamined Patent Application Publication No. 1996-239414 and WO 2007/114102. As the organoaluminum oxy-compound (b-1), methylaluminoxane that is easily available because of a commercial product, or MMAO prepared by using trimethylaluminum and triisobutylaluminum is preferable.

Examples of the ionizing ionic compounds (b-2) include ionizing ionic compounds described in Japanese Unexamined Patent Application PublicationNo. 1996-239414 and WO 2007/114102. As the ionizing ionic compound (b-2), any of triphenylcarbenium tetrakis(pentafluorophenyl)borate and N,N-dimethylanilinium tetrakis(pentafluorophenyl)borate is preferable because they are easily available as commercial products and they greatly contribute to improvement in polymerization activity.

Examples of the organoaluminum compounds (b-3) include organoaluminum compounds described in WO 2007/114102. As the organoaluminum compound (b-3), any of trimethylaluminum, triethylauminum and triisobutylaluminum that are easily available because of commercial products is preferable. Of these, triisobutylaluminum that is easy to handle is particularly preferable.

As the at least one compound (b) selected from the compounds (b-1) to (b-3), a combination of triisobutylaluminum and triphenylcarbenium tetrakis(pentafluorophenyl)borate or a combination of triisobutylaluminum and N,N-dimethylanilinium tetrakis(pentafluorphenyl)borate is preferable because polymerization activity is greatly improved.

When polymerization of a monomer is carried out using the metallocene catalyst for olefin polymerization, a content of each component can be determined as follows.

(1) The metallocene compound (a) can be used usually in an amount of $10^{-9}$ to $10^{-1}$ mol, preferably $10^{-8}$ to $10^{-2}$ mol, per liter of the reaction volume.

(2) When a catalyst containing the metallocene compound (a) and the organoaluminum oxy-compound (b-1) as the components of the olefin polymerization catalyst is used, the compound (b-1) can be used in such an amount that the molar ratio [Al/M] of an aluminum atom (Al) in the compound (b-1) to all the transition metal atoms (M) in the metallocene compound (a) usually becomes 0.01 to 5000, and preferably 0.05 to 2000.

(3) When a catalyst containing the metallocene compound (a) and the ionizing ionic compound (b-2) as the components of the olefin polymerization catalyst is used, the compound (b-2) can be used in such an amount that the molar ratio [(b-2)/M] of the compound (b-2) to all the transition metal atoms (M) in the metallocene compound (a) usually becomes 1 to 10, and preferably 1 to 5.

(4) When a catalyst containing the metallocene compound (a) and the organoaluminum compound (b-3) as the components of the olefin polymerization catalyst is used, the compound (b-3) is used in such an amount that the molar ratio [(b-3)/M] of the compound (b-3) to all the transition metal atoms (M) in the metallocene compound (a) usually becomes 0.01 to 50000, and preferably 0.05 to 10000.

The polymerization temperature is usually in the range of 10 to 200°C, but from the viewpoint of production of an ethylene-based polymer in the aforesaid preferred range, the polymerization temperature is preferably in the range of 60 to 180 ° C, more preferably in the range of 75 to 170°C, and still more preferably in the range of 100 to 170°C. The polymerization pressure can be usually set to not less than normal pressure but not more than 7.8 MPa-G (G: gauge pressure), and preferably not less than normal pressure but not more than 4.9 MPa-G (G: gauge pressure).

In the polymerization, ethylene, and if necessary, an $\alpha$-olefin are fed to the polymerization system in such amounts that the polymer (B) having the aforesaid specific composition can be obtained. In the polymerization, further, a molecular weight modifier such as hydrogen may be added.

By carrying out the polymerization as above, a polymer produced is obtained usually as a polymer solution containing the polymer, and therefore, by treating the solution in a conventional manner, the polymer (B) is obtained.

In the present invention, the polymer obtained by the above process may be further purified by, for example, a method of degassing the polymer under vacuum at a temperature of not lower than the melting point of the polymer, a method including dissolving the polymer once in a solvent such as toluene, xylene, hexane or heptane, then introducing a polar solvent such as methanol or acetone into the solution and filtering the solution to remove a low-molecular weight portion, or a method including dissolving the total amount of the polymer in a solvent, then precipitating a high-molecular weight portion or a low-molecular weight portion at a specific temperature and removing the portion.

The mass-average molecular weight (Mw) of the polymer (B) tends to decrease by raising the polymerization temperature or raising the hydrogen concentration during polymerization, and can be controlled to be in the above range. Furthermore, the mass-average molecular weight can be controlled by the amount of the organoaluminum oxy-compound and/or the ionizing ionic compound, which are used as cocatalysts. In addition, the mass-average molecular weight can be controlled also by carrying out purification after the polymerization.

The content of units derived from the $\alpha$-olefin having 3 to 20 carbon atoms can be controlled by adjusting the amount of the $\alpha$-olefin having 3 to 20 carbon atoms at the time of polymerization, or by the type of the catalyst, the polymerization temperature or the like.

The ratio (Mw/Mn) of the polymer (B) can be controlled by the type of the catalyst, the polymerization temperature or the like. In general, a Ziegler-Natta catalyst or a metallocene catalyst is used for producing an ethylene-based polymer, but in order to obtain Mw/Mn in a preferred range, it is preferable to use a metallocene catalyst. For decreasing Mw/Mn, the polymer obtained by the above process may be further purified by, for example, a method of degassing the polymer under vacuum at a temperature of not lower than the melting point of the polymer, a method including dissolving the polymer once in a solvent such as toluene, xylene, hexane or heptane, then introducing a polar solvent such as methanol or acetone into the solution and filtering the solution to remove a low-molecular weight portion, or a method including dissolving the total amount of the polymer in a solvent, then precipitating a high-molecular weight portion or a low-molecular weight portion at a specific temperature and removing the portion.

The density and the melting point of the polymer (B) can be controlled to be in the aforesaid ranges in the following manner. That is to say, by increasing the content of structural units derived from the $\alpha$-olefin having 3 to 20 carbon atoms, the density and the melting point tend to decrease. The density and the melting point can be controlled also by the type of the catalyst, the polymerization temperature or the like. In addition, they can also be controlled by carrying out purification after the polymerization.

The number of endothermic peaks in the DSC measurement of the polymer (B) can be controlled by the type of the catalyst, the polymerization temperature or the like. Furthermore, it can also be obtained by mixing two or more kinds of ethylene/$\alpha$-olefin copolymers.

To the polymer (B), additives known in the field of polyolefins, such as weathering stabilizer, heat stabilizer, antistatic agent, anti-slip agent, anti-blocking agent, anti-fogging agent, nucleating agent, lubricant, pigment, dye, plasticizer, anti-aging agent, hydrochloric acid absorber, antioxidant, copper inhibitor and filler, which are different from the polymer (B) in the present invention, may be added when needed, within limits not detrimental to the object of the present invention. The amounts of the additives added can be appropriately determined in known ranges.

(Poly(1-butene) resin composition)

·Requirement (I)

In the poly (1-butene) resin composition of the present invention, a content (% by mass) $[W_A]$ of the resin (A) is 95.000 to 99.999, and a content (% by mass) $[W_B]$ of the polymer (B) is 0.001 to 5.000; it is preferable that $W_A$ is 97.000 to 99.995% by mass and $W_B$ is 0.005 to 3.000% by mass; it is more preferable that $W_A$ is 98.00 to 99.99% by mass and $W_B$ is 0.01 to 2.00% by mass; and it is still more preferable that $W_A$ is 98.0 to 99.9% by mass and $W_B$ is 0.1 to 2. 0% by mass, (with the proviso that the total of $W_A$ and $W_B$ is 100% by mass).

Since $W_A$ and $W_B$ are in the above ranges, the balance between strength and moldability is excellent.

·Requirement (II)

A half-crystallization time $T_{1/2}$ (unit: sec) of the poly(1-butene) resin composition of the present invention at an isothermal crystallization temperature 90°C, as determined by differential scanning calorimeter (DSC) measurement, a density d (kg/m$^3$) of the polymer (B), and a content (% by mass) $[W_B]$ of the polymer (B) satisfy a relationship represented by the following formula (1) .

$$T_{1/2} > (0.27 \times W_B - 1.34) \times d - 274 \times W_B + 1389 \qquad \text{Formula (1)}$$

In the case where an area between a DSC calorie curve in the isothermal crystallization process and a baseline is taken as the total calories, the half-crystallization time $T_{1/2}$ as determined by the isothermal crystallization measurement is a time required to reach 50% calories of the total calories [see "Shin Kobunshi Jikken-gaku (New Polymer Experimentology) 8: Kobunshi no Bussei (Properties of Polymers)" (Kyoritsu Shuppan Co., Ltd.)].

In the present invention, measurement of the half-crystallization time ($T_{1/2}$) at an isothermal crystallization temperature 90°C is carried out in the following manner. That is to say, the half-crystallization time $T_{1/2}$ (unit: sec) is obtained as follows. About 5 mg of a sample is placed in an aluminum pan for exclusive use and heated up to 200°C from room temperature at 320°C/min by the use of a differential scanning calorimeter. The sample was maintained at the same temperature for 10 minutes and then cooled down to 90°C from the same temperature at 320 ° C/min. A time required for the crystallization calories given when the composition is isothermally crystallized at 90°C to reach 1/2 of the total calories is taken as a half-crystallization time.

Fig. 1 is a view in which the density ($kg/m^3$) of the polymer (B) is set on the abscissa, the half-crystallization time $T_{1/2}$ (second(s)) of the poly (1-butene) resin composition at an isothermal crystallization temperature 90°C, as determined by differential scanning calorimeter (DSC) measurement, is set on the ordinate, and Examples and Comparative Examples described in the present specification are plotted. In addition, lines each corresponding to the right side of the formula (1) in the case where $W_B$ is 0.2, 0.5 or 2. 0 (% by mass) are shown in Fig. 1. It can be seen from Fig. 1 that as the density d of the polymer (B) is decreased or the value of the content (% by mass) $[W_B]$ of the polymer (B) is decreased, the value of the half-crystallization time $T_{1/2}$ tends to increase, and that with regard to the relationship between the density d and the half-crystallization time $T_{1/2}$, a straight line can be drawn. Furthermore, it can be seen that as the value of $[W_B]$ is decreased, the inclination of the line increases. Moreover, it can be seen that the value of the half -crystallization time $T_{1/2}$ of the resin composition of the present invention is larger than that of the resin composition (Comparative Example) using a conventional ethylene-based polymer.

By carrying out numerical analysis based on the results of Examples and Comparative Examples as described above, straight lines demarcating the Example/Comparative Example data were fitted to thereby obtain the aforesaid formula (1).

Accordingly, it can be understood that the poly (1-butene) resin composition satisfying the formula (1) has a larger value of the half-crystallization time $T_{1/2}$ than a conventional poly(1-butene) resin composition.

The present inventors have thought that the reason why the half-crystallization time $T_{1/2}$ of the poly (1-butene) resin composition of the present invention becomes long is as follows.

The ethylene-based polymer (B) for use in the present invention is an ethylene-based polymer obtained by using a metallocene catalyst, as previously described, and as compared with a metallocene wax using a conventional Ziegler-Natta catalyst, the polymer (B) has a small amount of a catalyst residue. It is thought that in the melt crystallization of a composition containing a polybutene resin and an ethylene-based polymer, the ethylene-based polymer is previously crystallized in the molten polybutene resin and therefore acts as a crystal nucleating agent. However, it is presumed that since the amount of the catalyst residue in the ethylene-based polymer of the present invention is small, the crystallization rate in the molten polybutene resin is decreased, and crystallization of the poly(1-butene) resin composition tends to be slowed, or it is presumed that since the molecular weight distribution of the ethylene-based polymer (B) is narrow, the amount of a low-molecular weight component is small, and therefore, the action of the polymer (B) as a crystal nucleating agent in the poly(1-butene) resin composition may be weak.

Next, the reason why the poly(1-butene) resin composition has a good balance between physical properties and moldability (relationship between slow crystallization and excellent physical properties) is thought to be as follows. It is presumed that the resin composition of the present invention has a low crystal nucleus-forming rate, as described above, and the crystallization of the resin composition is slow. However, it is also presumed that when the ethylene-based polymer (B) for use in the present invention is used, homogeneous crystal nuclei are formed, and therefore, homogeneous crystals of the poly(1-butene) resin are also formed, so that the resulting molded body has high strength.

In the case where a low-molecular weight component such as wax is added in a large amount, the slip effect in the non-crystalline portion becomes conspicuous, and slipping of molecular chains easily occurs, thereby easily bringing about creep rupture. On that account, it is more preferable that the amount of the low-molecular weight component added can be suppressed in the field where creep characteristics are considered to be important, such as a field of pipes.

[Other components]

To the poly (1-butene) resin composition of the present invention, other polymers and additives for resins, the additives being known in the field of polyolefins, can be arbitrarily added according to the intended use, within limits not detrimental to the effect of the present invention. Hereinafter, other polymers that are different from the poly (1-butene) resin (A) and the ethylene-based polymer (B) are also referred to as "other polymers (D)", and the additives for resins are also referred to as "additives (C)".

The resin composition of the present invention may have been partially or wholly graft-modified with a polar monomer. Details of the graft modification will be described later in the section of (Graft modification).

(Other polymers (D))

As the other polymers (D), thermoplastic resins that are different from the resin (A) and the polymer (B) can be widely used. When the other polymers (D) are contained, the total content of the other polymers (D) is usually 0.1 to 30% by mass based on 100% by mass of the total mass of the resin (A) and the polymer (B), within limits not detrimental to the effect of the present invention. The upper limit is preferably 20% by mass, and more preferably 10% by mass.

The thermoplastic resins are, for example, the following resins.

That is to say, examples of the thermoplastic resins include:

thermoplastic polyolefin-based resins, e.g., polyethylenes, such as low-density, medium-density or high-density polyethylene, and high-pressure low-density polyethylene, polypropylenes, such as isotactic polypropylene and syndiotactic polypropylene, poly(1-butene), poly(4-methyl-1-pentene), poly(3-methyl-1-pentene), poly(3-methyl-1-butene), ethylene/$\alpha$-olefin copolymers, propylene/$\alpha$-olefin copolymers, 1-butene/$\alpha$-olefin copolymers, cyclic olefin copolymers, chlorinated polyolefins, and modified polyolefin resins obtained by modifying these olefin-based resins; thermoplastic polyamide-based resins, such as aliphatic polyamides (nylon 6, nylon 11, nylon 12, nylon 66, nylon 610, nylon 612) ;

thermoplastic polyester-based resins, such as polyethylene terephthalate, polybutylene terephthalate and polyester-based elastomers;

thermoplastic vinyl aromatic resins, such as polystyrene, ABS resin, AS resin, and styrene-based elastomers (styrene/butadiene/styrene block polymer, styrene/isoprene/styrene block polymer, styrene/isobutylene/styrene block polymer, hydrogenation products of these polymers);

thermoplastic polyurethane; vinyl chloride resin; vinylidene chloride resin; acrylic resin; vinyl acetate copolymers such as ethylene/vinyl acetate copolymer; ethylene/methacrylicacidacrylate copolymer; ionomer; ethylene/vinyl alcohol copolymer; poly(vinyl alcohol); fluororesin; polycarbonate; polyacetal; polyphenylene oxide; polyphenylene sulfide polyimide; polyallylate; polysulfone; polyether sulfone; rosin-based resin; terpene-based resin and petroleum resin; and

copolymer rubbers, such as ethylene/$\alpha$-olefin/diene copolymer, propylene/$\alpha$-olefin/diene copolymer, 1-butene/$\alpha$-olefin/diene copolymer, polybutadiene rubber, polyisoprene rubber, neoprene rubber, nitrile rubber, butyl rubber, polyisobutylene rubber, natural rubber and silicone rubber.

Of the thermoplastic resins, low-density, medium-density or high-density polyethylene, high-pressure low-density polyethylene, isotactic polypropylene, syndiotactic polypropylene, poly(1-butene) , poly(4-methyl-1-pentene), poly(3-methyl-1-pentene), poly(3-methyl-1-butene), ethylene/$\alpha$-olefin copolymer, propylene/$\alpha$-olefin copolymer, 1-butene/$\alpha$-olefin copolymer, styrene-based elastomer, vinyl acetate copolymer, ethylene/methacrylic acid acrylate copolymer, ionomer, fluororesin, rosin-based resin, terpene-based resin and petroleum resin are preferable, and from the viewpoints of improvement in heat resistance, improvement in low-temperature resistance, and flexibility, polyethylene, isotactic polypropylene, syndiotactic polypropylene, poly(1-butene), ethylene/$\alpha$-olefin copolymer, propylene/$\alpha$-olefin copolymer, 1-butene/$\alpha$-olefin copolymer, vinyl acetate copolymer, styrene-based elastomer, rosin-based resin, terpene-based resin and petroleum resin are more preferable.

The other polymers (D) may have been partially or wholly graft modified with a polar monomer. Details of the graft modification will be described later in the section of (Graft modification).

The other polymers (D) may be used singly, or may be used in combination of two or more kinds.

(Additives (C))

As the additives (C), additives that are different from the resin (A) and the polymer (B) and are known in the field of polyolefins can be mentioned. Examples of such additives include nucleating agent, anti-blocking agent, pigment, dye, filler, lubricant, plasticizer, mold release agent, antioxidant, flame retardant, ultraviolet light absorber, antibacterial agent, surface active agent, antistatic agent, weathering stabilizer, heat stabilizer, anti-slip agent, blowing agent, crystallizing aid, anti-fogging agent, anti-aging agent, hydrochloric acid absorber, impact improver, crosslinking agent, co-crosslinking agent, crosslinkingaid, pressure-sensitive adhesive, softener and processing aid.

The additives (C) maybe used singly, or may be used in combination of two or more kinds.

The content of each of the additives (C) is determined according to the intended use within limits not detrimental to the object of the present invention and is not specifically restricted, but the content of each additive is preferably about 0.05 to 70% by mass based on 100% by mass of the total mass of the resin (A) and the polymer (B). The upper limit is more preferably 30% by mass.

As the nucleating agent, any of known nucleating agents is employable in order to further improve moldability of the olefin polymer, that is, in order to increase the crystallization temperature and thereby increase the crystallization rate. Specific examples thereof include dibenzylidene sorbitol-based nucleating agents, phosphoric acid ester salt-based nucleating agents, rosin-based nucleating agents, benzoic acid metal salt-based nucleating agents, fluorinated polyethylene, sodium 2,2-methylenebis(4,6-di-t-butylphenyl)phosphate, pimelic acid or its salt, and 2,6-naphthalenedicarboxylic acid dicyclohexylamide.

The amount of the nucleating agent added is not specifically restricted, but it is preferably 0.1 to 1% by mass based on 100% by mass of the total content of the resin (A) and the polymer (B). The nucleating agent can be appropriately added, for example, during polymerization, after polymerization or during molding.

As the anti-blocking agent, any of known anti-blocking agents is employable. Specific examples thereof include finely powdered silica, finely powdered aluminum oxide, finely powdered clay, powdery or liquid silicone resin, tetrafluoroethylene resin, and finely powdered crosslinked resins such as crosslinked acrylic or methacrylic resin powder. Of these, finely powdered silica and crosslinked acrylic or methacrylic resin powder are preferable.

Examples of the pigments include inorganic pigments (titanium oxide, iron oxide, chromium oxide, cadmium sulfide, etc.) and organic pigments (azolake-based, thioindigo-based, phthalocyanine-basedand anthraquinone-based). Examples of the dyes include azo-based, anthraquinone-based and triphenylmethane-based dyes. The amounts of the pigment and the dye added are not specifically restricted, but the total amount thereof is usually not more than 5% by mass, and preferably 0.1 to 3% by mass, based on 100% by mass of the total mass of the resin (A) and the polymer (B).

Examples of the fillers include glass fiber, carbonfiber, silica fiber, metal (stainless steel, aluminum, titanium, copper, or the like) fiber, carbon black, silica, glass bead, silicates (calcium silicate, talc, clay, etc.), metal oxides (iron oxide, titanium oxide, alumina, etc.), carbonates of metals (calcium sulfate, barium sulfate), various metal (magnesium, silicon, aluminum, titanium, copper, etc.) powders, mica, glass flake, natural fibers (wood powder, wood fiber, bamboo, cotton, cellulose, nanocellulose-based fiber, etc.), and agricultural product fibers (straw, hemp, flax, kenaf, kapok, jute, ramie, sisal hemp, henequen, corn fiber, coir, nutshell, shaff, etc.) . Examples of organic fillers include lignin, starch, and products containing them. The amounts of these fillers are not specifically restricted, but the total amount thereof is usually not more than 70% by mass, and more preferably not more than 30% by mass, based on 100% by mass of the total mass of the resin (A) and the polymer (B) .

Examples of the lubricants include waxes (carnauba wax, etc.), higher fatty acids (stearic acid, etc.), higher alcohols (stearyl alcohol, etc.), and higher fatty acid amides (stearic acid amide, etc.).

Examples of the plasticizers include aromatic carboxylic acid esters (dibutyl phthalate, etc.), aliphatic carboxylic acid esters (methyl acetyl ricinoleate, etc.), aliphatic dicarboxyic acid esters (adipic acid-propylene glycol-based polyester, etc.), aliphatic tricarboxylic acid esters (triethyl citrate, etc.), phosphoric acid triesters (triphenyl phosphate, etc.), epoxy fatty acid esters (epoxy butyl stearate, etc.), and petroleum resin.

Examples of the mold release agents include lower (C1 to C4) alcohol esters of higher fatty acids (butyl stearate, etc.), polyhydric alcohol esters of fatty acids (C4 to C30) (hydrogenated castor oil, etc.), glycol esters of fatty acids, and liquid paraffin.

As the antioxidant, any of known antioxidants is employable. Specific examples thereof include phenol-based antioxidants (2,6-di-t-butyl-4-methylphenol, etc.), polycyclic phenol-based antioxidants (2,2' -methylenebis(4-methyl-6-t-butylphenol), etc.), phosphorus-based antioxidants (tetrakis(2,4-di-t-butylphenyl)-4,4-biphenylene diphosphonate, etc.), sulfur-based antioxidants (dilauryl thiodipropionate, etc.), amine-based antioxidants (N,N-diisopropyl-p-phenylenediamine, etc.), and lactone-based antioxidants.

Examples of the flame retardants include organic flame retardants (nitrogen-containing, sulfur-containing, silicon-containing orphosphorus-containing flame retardants, etc.), and inorganic flame retardants (antimony trioxide, magnesium hydroxide, zinc borate, red phosphorus, etc.).

Examples of the ultraviolet light absorbers include benzotriazole-based, benzophenone-based, salicylic acid-based and acrylate-based ultraviolet light absorbers.

Examples of the antibacterial agents include quaternary ammonium salts, pyridine-based compounds, organic acids, organic acid esters, halogenated phenols and organic iodine.

The surface active agent is a nonionic, anionic, cationic or amphoteric surface active agent. Examples of the nonionic surface active agents include polyethylene glycol type nonionic surface active agents, such as higher alcohol ethylene oxide adducts, fatty acid ethylene oxide adducts, higher alkylamine ethylene oxide adducts and polypropylene glycol ethylene oxide adducts, and polyhydric alcohol type nonionic surface active agents, such as polyethylene oxide, fatty acid esters of glycerol, fatty acid esters of pentaerythritol, fatty acid esters of sorbitol or sorbitan, alkyl ethers of polyhydric alcohols and aliphatic amides of alkanolamines. Examples of the anionic surface active agents include sulfuric acid ester salts, such as alkali metal salts of higher fatty acids, sulfonates, such as alkylbenzene sulfonates, alkyl sulfonates and paraffin sulfonate, and phosphoric acid ester salts, such as higher alcohol phosphoric acid ester salt. Examples of the cationic surface active agents include quaternary ammonium salts such as alkyltrimethylammonium salts. Examples of the amphoteric surface active agents include amino acid type amphoteric surface active agents such as higher alkylaminopropionates, and betaine type amphoteric surface active agents such as higher alkyl dimethyl betaine and higher alkyl dihydroxyethyl betaine.

Examples of the antistatic agents include the above-described surface active agents, fatty acid esters and polymer type antistatic agents. Examples of the fatty acid esters include esters of stearic acid and oleic acid. Examples of the polymer type antistatic agents include polyether ester amide.

As the crosslinking agent, for example, an organic peroxide is used.

Examples of the organic peroxides include dicumyl organic peroxide, di-tert-butyl organic peroxide,

2,5-dimethyl-2,5-di-(tert-butylperoxy)hexane,
2,5-dimethyl-2,5-di-(tert-butylperoxy)hexyne-3,
1,3-bis(tert-butylperoxyisopropyl)benzene,
1,1-bis(tert-butylperoxy)-3,3,5-trimethylcyclohexane, n-butyl-4,4-bis(tert-butylperoxy)valerate, benzoyl organic peroxide, p-chlorobenzoyl peroxide, 2,4-dichlorobenzoyl organic peroxide, tert-butyl peroxybenzoate, tert-butyl perbenzoate, tert-butyl peroxyisopropyl carbonate, diacetyl organic peroxide, lauroyl organic peroxide and tert-butyl cumyl organic peroxide.

From the viewpoints of odor properties and scorch stability,

2,5-dimethyl-2,5-di-(tert-butylperoxy)hexane,
2,5-dimethyl-2,5-di-(tert-butylperoxy)hexyne-3,
1,3-bis(tert-butylperoxyisopropyl)benzene,
1,1-bis(tert-butylperoxy)-3,3,5-trimethylcyclohexane and
n-butyl-4,4-bis (tert-butylperoxy) valerate are preferably used among the above compounds, and 1,3-bis(tert-butylperoxyisopropyl)benzene is more preferably used.

The organic peroxide is used preferably in an amount of 0.05 to 10% by mass based on 100% by mass of the total content of the resin (A) and the polymer (B).

Examples of the crosslinking aids that can be added in the crosslinking process using the organic peroxide include peroxy crosslinking aids, such as sulfur, p-quinone dioxime, p,p' -dibenzoyl quinine dioxime, N-methyl-4-dinitrosoaniline, nitrobenzene, diphenylquanidine and trimethylolpropane-N,N'-m-phenylenedimaleimide; polyfunctional methacrylate monomers, such as divinylbenzene, triallyl cyanurate, ethylene glycol dimethacrylate, diethylene glycol dimethacrylate, polyethylene glycol dimethacrylate, trimethylolpropane trimethacrylate and allyl methacrylate; and polyfunctionl vinyl monomers, such as vinyl butyrate and vinyl stearate.

By using the above compounds, homogenous and mild crosslinking reaction can be expected. In the present invention, particularly, divinylbenzene is preferably used. Divinylbenzene is easy to handle, has good compatibility with a polymer, has an action to solubilize an organic peroxide and functions as a dispersing agent for the organic peroxide. On this account, a homogeneous crosslinking effect is obtained, and a dynamically heat - treated product having a good balance between fluidity and physical properties is obtained.

The crosslinking aid is used in an amount of 0.05 to 10% by mass based on 100% by mass of the total content of the resin (A) and the polymer (B).

Examples of the softeners include mineral oil-based softeners, such as process oil, lubricating oil, paraffin, liquid paraffin, petroleum asphalt and vaseline; coal tar-based softeners, such as coal tar and coal tar pitch; fatty oil-based softeners, such as castor oil, rapeseed oil, soybean oil and coconut oil; waxes, such as tall oil, beeswax, carnauba wax and lanoline; fatty acids or metal salts thereof, such as ricinolic acid, palmitic acid, stearic acid, barium stearate and calcium stearate; naphthetic acid or metal soap thereof; pine oil; rosin or derivatives thereof; terpene resin; petroleum resin; coumarone-indene resin; synthetic polymer materials, such as atactic polypropylene; ester-based plasticizers, such as dioctyl phathalate, dioctyl adipate and dioctyl sebacate; carbonic acid ester-based plasticizers, such as diisododecyl carbonate; and other softeners, such as microcrystalline wax, rubber substitute (factice), liquid polybutadiene, modified liquid polybutadiene, liquid thiokol and hydrocarbon-based synthetic lubricating oils. Of these, preferable are petroleum-based softeners and hydrocarbon-based synthetic lubricating oils.

The amount of the softener is not specifically restricted, but it is preferably 1 to 200% by mass based on 100% by mass of the total content of the resin (A) and the polymer (B). The softener not only facilitates processing in the preparation of the resin composition but also helps dispersion of carbon black or the like.

(Graft modification)

Examples of the polar monomers used for the graft modification include hydroxyl group-containing ethylenically unsaturated compounds, amino group-containing ethylenically unsaturated compounds, epoxy group-containing ethylenically unsaturated compounds, aromatic vinyl compounds, unsaturated carboxylic acids or derivatives thereof, vinyl ester compounds, vinyl chloride, and carbodiimide compounds. In Particular, unsaturated carboxylic acids or derivatives thereof are preferable. Examples of the unsaturated carboxylic acids or derivatives thereof include unsaturated compounds having one or more carboxylic acid groups, esters of compounds having a carboxylic acid group and alkyl alcohols, and unsaturated compounds having one or more carboxylic anhydride groups. Examples of unsaturated groups include vinyl group, vinylene group and unsaturated cyclic hydrocarbon group.

Specific examples of the polar monomers include unsaturated carboxylic acids, such as acrylic acid, maleic acid, fumaric acid, tetrahydrophthalic acid, itaconic acid, citraconic acid, crotonic acid, isocrotonic acid and Nadic acid [trademark] (endocis-bicyclo[2.2.1]hept-5-ene-2,3-dicarboxylic acid); and derivatives of unsaturated carboxylic acids, such as acid halides, amides, imides, anhydrides and esters thereof. Specific examples of the derivatives include malenyl chloride, maleimide, maleic anhydride, citraconic anhydride, monomethyl maleate, dimethyl maleate and glycidyl maleate.

These unsaturated carboxylic acids and/or derivatives thereof may be used singly, or may be used in combination of two or more kinds. Of these, unsaturated dicarboxylic acids or derivatives thereof are preferable, and maleic acid, Nadic acid or acid anhydrides of them are particularly preferably used.

Modification is attained by graft polymerizing a polar monomer onto a modification obj ect. When a polar monomer is graft polymerized onto the modification object, the polar monomer is used usually in an amount of 1 to 100 parts by mass, and preferably 5 to 80 parts by mass, based on 100 parts by mass of the modification object. This graft polymerization is usually carried out in the presence of a radical initiator.

As the radical initiator, an organic peroxide, an azo compound or the like can be used. The radical initiator may be used by mixing it as it is with the modification object and the polar monomer, or may be used after dissolved in a small amount of an organic solvent. As the organic solvent, any of organic solvents can be used without specific restriction as long as it can dissolve the radical initiator.

When the polar monomer is graft polymerized onto the modification object, a reducing substance may be used. By using the reducing substance, the graft quantity of the polar monomer can be increased.

Graft modification of the modification object with the polar monomer can be carried out by a hitherto known method. For example, the graft modification can be carried out by dissolving the modification object in an organic solvent, then adding the polar monomer, a radical initiator, etc. to the solution, and allowing them to react with each other usually at a temperature of 70 to 200°C, preferably 80 to 190°C, and usually for 0.5 to 15 hours, preferably 1 to 10 hours.

By allowing the modification object and the polar monomer to react with each other using an extruder or the like, a resin composition containing a modified body can also be produced. This reaction is carried out usually at a temperature of not lower than the melting point of the modification object. Specifically, modification of the thermoplastic resin is desirably carried out, for example, usually at a temperature of 120 to 300°C, preferably 120 to 250°C, and usually for 0.5 to 10 minutes. Modification of the resin (A) is desirably carried out, for example, usually at a temperature of 160 to 300°C, preferably 180 to 250°C, and usually for 0.5 to 10 minutes.

The modification quantity of the modified body obtained as above (graft quantity of polar monomer) is usually 0.1 to 50% by mass, preferably 0.2 to 30% by mass, and more preferably 0.2 to 10% by mass, when the quantity of the modified body is 100% by mass.

In the present invention, the poly (1-butene) resin composition can also be obtained by previously producing a modified body of the resin (A) and/or a modified body of the polymer (B) and kneading the modified body of the resin (A) and/or the modified body of the polymer (B), and if necessary, an unmodified body of the resin (A) and/or an unmodified body of the polymer (B), the additives (C), and the other polymers (D) and/or the other polymers (D), in given amounts.

The modification can also be carried out by introducing the polar monomer into the poly (1-butene) resin composition of the present invention. The content of the polar monomer is not specifically restricted, but it is preferably 0.001 to 50% by mass, more preferably 0.001 to 10% by mass, still more preferably 0.001 to 5% by mass, and most preferably 0.01 to 3% by mass, based on 100% by mass of the resin composition. The content of the polar monomer can be easily designed according to the purpose by, for example, appropriately selecting the graft conditions.

When the modified body is used, adhesion to other resins and compatibility with them are excellent, and wettability of a surface of the resulting molded body may be improved. By using the modified body, moreover, compatibility with other materials or adhesion to them can be sometimes imparted.

(Production process for resin composition)

The production process for the resin composition of the present invention is not specifically restricted, but for example, the resin composition is obtained by mixing the poly(1-butene) resin (A) and the ethylene-based polymer (B), and if necessary, other arbitrary components in the aforesaid addition ratio and then melt kneading the mixture.

The melt kneading method is not specifically restricted, and can be carried out by the use of a melt kneading device that is generally on the market, such as an extruder. For example, the cylinder temperature of a part where kneading is carried out in the melt kneading device is usually 120 to 250°C, and preferably 120 to 230°C. The kneading time is usually 0.1 to 30 minutes, and particularly preferably 0.5 to 5 minutes.

[Molded body]

Various molded bodies obtained from the poly (1-butene) resin composition of the present invention can be widely used in hitherto known polyolefin applications. The molded body can be obtained by known thermoforming methods, such as extrusion molding, injection molding, inflation method, blow molding, extrusion blow molding, injection blow molding, press molding, vacuum forming, powder slush molding, calendering and foam molding. The molded body is formed by the use of the poly(1-butene) resin composition of the present invention.

Although the thickness of the molded body is not specifically restricted and can be appropriately determined according to the intended use, it is usually in the range of 0.1 to 20 mm, and preferably 0.15 to 10 mm (however, a stretched film is excluded). When the thickness of the molded body is in this range, the molded body has a good balance between rigidity and uniform processability.

The shape of the extrusion molded body and the type of a manufactured article thereof are not specifically restricted. Examples of the extrusion molded bodies include a sheet, a stretched or unstretched film, a pipe, a hose, a wire coating and a tube. In particular, a sheet (skin material), a film, a tube, a catheter, a monofilament and a nonwoven fabric can be mentioned.

For the extrusion molding, hitherto known extrusion devices and molding conditions can be adopted. For example, by using a single screw extruder, a kneading extruder, a ram extruder, a gear extruder or the like, a molten butene-based polymer or resin composition is extruded through a specific die, and thereby, it can be molded into a desired shape.

The stretched film can be obtained by stretching such an extruded sheet or extruded unstretched film as above by a known stretching method, such as a tentering method (lengthwise-crosswise orientation, crosswise-lengthwise orientation), a simultaneous biaxial orientation method or a monoaxial stretching method. When the sheet or the unstretched film is stretched, the stretch ratio is usually about 20 to 70 times in the case of biaxial orientation and usually about 2 to 10 times in the case of monoaxial stretching. By carrying out stretching, a stretched film having a thickness of 1 to 500 $\mu$m, preferably 5 to 200 $\mu$m, can be obtained.

The filament body can be produced by extruding a molten resin composition through a spinneret. The filament thus obtained may be further stretched. This stretching has only to be carried out to such a degree that the filament is molecular-oriented in at least a monoaxial direction, and is desirably carried out usually in a stretch ratio of about 5 to 10 times. The filament is excellent in transparency, rigidity, heat resistance, impact resistance and stretchability. The nonwoven fabric can be produced specifically by a spunbond method or a melt blow method.

The injection molded body can be produced by injection molding the resin composition into any of various shapes by the use of a hitherto known injection molding device adopting known conditions. The injection molded body is not easily electrostatically charged, is excellent in transparency, rigidity, heat resistance, impact resistance, surface gloss, chemical resistance and abrasion resistance, and can be widely used for a pipe joint, an automotive interior trim material, an automotive exterior trim material, a housing of household appliance, a container, etc.

As the film, an inflation film can also be produced. The inflation film can be suitably used as a material for a daily necessity packaging material, a food packaging material, a food container, a retort container, a protective film, a cosmetic film/sheet, a shrink film, an infusion solution bag, a fusion-bonded film, a stretched film, a raw material film to be stretched, a medical container, or the like.

The sheet and the film are not easily electrostatically charged, are excellent in rigidity such as tensile modulus, heat resistance, stretchability, impact resistance, aging resistance, transparency, see-through, gloss and heat-sealing properties, and can be widely used for packaging films and the like. In this case, the sheet and the film may be each a multilayer molded body.

The blow molded body can be produced by blow molding the resin composition by the use of a hitherto known blow molding device adopting known conditions. In this case, the blow molded body may be a multi layer molded body.

For example, in the extrusion blow molding, a hollow molded body can be produced by extruding the resin composition in a molten state through a die at a resin temperature of 100°C to 300°C to form a tubular parison, then holding the parison in a mold of a desired shape, then blowing air and thereby fitting the parison to the mold at a resin temperature of 130 °C to 300 °C. The stretch (blow) ratio is preferably about 1.5 to 5 times in the crosswise direction.

For example, in the injection blow molding, a hollow molded body can be produced by injecting the resin composition into a parison mold at a resin temperature of 100 ° C to 300 ° C to form a parison, then holding the parison in a mold of a desired shape, then blowing air and thereby fitting the parison to the mold at a resin temperature of 120°C to 300°C. The stretch (blow) ratio is preferably 1.1 to 1.8 times in the lengthwise direction and is preferably 1.3 to 2.5 times in the crosswise direction.

The blow molded body is excellent not only in transparency, rigidity (or flexibility), heat resistance and impact resistance but also in moisture resistance. The blow molded body can be used for a container, a bottle or a cup for, for example, food, seasoning, cosmetic, hair treatment, drinking water, soft drink, carbonated drink, alcohols, bleaching agent, detergent, shampoo, hair rinse, conditioner, softener, fabric softener, medicine, adhesive, agricultural chemical, medical use, baby bottle, laboratory instrument, kerosene can, or gasoline tank of generator, lawn mower, two-wheeled vehicle, automobile or the like.

As the press molded body, a stamping molded body can be mentioned, and for example, when a base material and a skin material are press molded at the same time to perform composite integral molding (stamping molding) of them, the resin composition canbe used as the base material. Specific examples of the stamping molded bodies include automotive interior trim materials, such as door trim, rear package trim, seat back garnish and instrument panel. The press molded body is not easily electrostatically charged and is excellent in rigidity (or flexibility), heat resistance, transparency, impact resistance, aging resistance, surface gloss, chemical resistance, abrasion resistance, etc.

For producing a formed body utilizing vacuum forming, for example, the resin composition is subjected to known extrusion processing in advance to obtain a sheet or a film, and the sheet or film is then subjected to vacuum forming. The thickness of the sheet or the film is not specifically restricted, but it is preferably 0.1 to 3 mm.

The vacuum forming method is not specifically restricted. In usual, a molded body in the form of a sheet or a film is softened by heating and is brought into close contact with a forming mold, then air is exhausted from an exhaust vent provided in the forming mold to further bring the resulting body into close contact with the forming mold, and thereafter, the body is cooled, whereby a formed body can be produced.

The surface temperature of the formed body during vacuum forming is usually in the temperature range of 120 to 250°C, preferably in the temperature range of 120 to 220°c, and more preferably in the temperature range of 120 to 200°C. When the surface temperature is in the above range, drawdown properties and shaping properties are good, and a uniform thickness is obtained.

The vacuum formed body can be suitably used for, for example, an automotive interior trim material, an automotive exterior trim material, a packaging case, a protective case, a protective sheet, a container, a bottle or a cup for food, beverage or the like, an information terminal case, an information terminal protective cover, a frame/cover for display material, furniture, or a framework for furniture.

In the present invention, a vacuum formed body, e.g., an automotive interior skin material such as instrument panel or door trim, can also be produced. The formed body is not easily electrostatically charged and is excellent in flexibility, heat resistance, impact resistance, aging resistance, surface gloss, chemical resistance, abrasion resistance, etc.

In the present invention, a powder slush molded body, such as automotive part, household appliance part, toy or general merchandise, can also be produced. The molded body is not easily electrostatically charged and is excellent in flexibility, heat resistance, impact resistance, aging resistance, surface gloss, chemical resistance, abrasion resistance, etc.

As the molded body of the present invention, a multilayer molded body having at least one layer composed of the resin composition of the present invention can also be mentioned. The multilayer molded body is a molded body at least one layer of which is a layer formed from the resin composition of the present invention. Specific examples thereof include a multilayer film, a multilayer sheet, a multilayer container, a multilayer tube and a multilayer coating film laminate in which the resin composition is contained as a constituent of a water-based paint.

The resin composition of the present invention is suitable as a material for forming a container or a nonwoven fabric. Examples of the containers include a frozen storage container, a food container such as retort pouch, and a bottle container. Other examples include a medical container and an infusion solution bag.

The resin composition of the present invention has the above-described characteristics and therefore can be utilized by molding it into a pipe, a pipe joint, a blow tank, a sheet, an unstretched or stretched film, a filament or a molded body of any of various shapes. Of these, a pipe and a pipe joint are preferable, and they are used for gas transportation and the like. In addition, the resin composition of the present invention is more preferably used for liquid transportation pipes for, for example, water and hot water supply, underfloor heating, hot water heating, hot spring piping, chemical spraying, draining, sprinkling, washing machine, dishwasher, toilet, bath room, solar system, mist generator and farming, and joints of these pipes. Of these, water and hot water supply pipes and joints thereof are particularly preferable.

Examples

The present invention is described in detail based on the following examples, but the present invention is not limited to those examples.

In the following examples and comparative examples, various properties were measured in the following manner.

[Property evaluation of ethylene-based polymer]

Properties of the ethylene-based polymers described in the examples and the comparative examples were measured in the following manner.

(Mass-average molecular weight (Mw), number-average molecular weight (Mn), molecular weight distribution (Mw/Mn))

Molecular weight and molecular weight distribution of the ethylene-based polymer were measured by using a gel permeation chromatograph (Waters Alliance/GPC2000 type) in which two TSKgel GMH[6]—HT columns and two TSKgel GMH[6]—HTL columns (each column size: diameter 7.5 mm, length 300 m) manufactured by Tosoh Corporation had been connected in series. Measurement was carried out using o-dichlorobenzene as a mobile phase medium and using 0. 025% by mass of BHT (Takeda Pharmaceutical Co., Ltd.) as an antioxidant under the conditions of a sample concentration of 0 .15 mg/mL (o-dichlorobenzene solution), a flow rate of 1.0 ml/min and a temperature of 140 °C. As standard polystyrene having a molecular weight of 500 to 20, 600, 000, polystyrene manufactured by Tosoh Corporation was used. By the use of a calibration curve using a standard polystyrene sample and a chromatogram obtained, Mn, Mw and Mw/Mn in terms of PE (polyethylene) were calculated based on a universal calibration method. In the calculation of the universal calibration method, coefficients of the following Mark-Houwink viscosity equation were used.

Coefficient of polystyrene (PS): $KPS=1.38\times10^{-4}$, $aPS=0.70$
Coefficient of polyethylene (PE): $KPE=5.06\times10^{-4}$, $aPE=0.70$ (Density ($d$, $kg/m^3$))
Density was measured by a density gradient tube method in accordance with JIS K 7112.

(Melting point, Tm, °C)

Meltingpoint (Tm) was measured by DSC-20 (manufactured by Seiko Instruments Inc.) in accordance with DSC (differential scanning calorimetry). Also, melting point of a poly(1-butene) resin was measured in the same manner.

Specifically, about 10 mg of a sample was heated up to about 200°C, maintained for 5 minutes, then cooled down to ordinary temperature (-20°C) at 20°C/min and thereafter heated up to 200°C from -20 ° C at 10°C/min, and a temperature of an endothermic peak of the resulting curve was determined as a melting point. When plural endothermic peaks of the resulting curve were present, a peak temperature at which the endothermic quantity at an endothermic peak was largest was taken as a melting point (Tm).

(Melt viscosity)

Melt viscosity was measured by using a Brookfield viscometer at 140°C.

(A value, B value)

From the results of the above-described GPC measurement, a ratio (% by mass) of a component having a molecular weight of not more than 1,000 was determined, and the resulting value was taken as A value. Further, from the results of the GPC measurement, a ratio (% by mass) of a component having a molecular weight of not less than 20,000 was determined, and the resulting value was taken as B value.

(Ash content)

A sample was placed in a porcelain crucible having a constant weight and preheated by an electric heater, and then the residue was subjected to complete ashing using an electric furnace at 650 °C until no mass change was observed. Subsequently, the crucible was cooled in air and then allowed to stand cool in a desiccator for 60 minutes, thereafter the mass of the ash content was measured in 0.1 mg units by a precision balance, and an ash content (ppm) based on the sample was calculated.

[Evaluation of poly(1-butene) resin composition]

The poly (1-butene) resin compositions obtained in the examples and the comparative examples were evaluated by the following methods.

[Half-crystallization time ($T_{1/2}$)]

A sample (about 5 mg) was set in Perkin Elmer DSC-7 type and heated up to 200°C from room temperature at 320°C/min. The sample was maintained at the same temperature for 10 minutes and then cooled down to 90 °C from the same temperature at 320°C/min. A time required for the crystallization calories given when the composition was isothermally crystallized at 90 °C to reach 1/2 of the total calories was taken as a half-crystallization time $T_{1/2}$ (unit: sec).

[Tensile test]

Using an ASTM IV type specimen punched out of a pressed sheet having a thickness of 2 mm obtained by press molding the poly (1-butene) resin composition under the conditions of 190 ° C for 5 minutes, a tensile test was carried out under the conditions of a pulling rate of 50 mm/min and a measuring temperature of 95 °C to measure a stress at yield (MPa) of the poly(1-butene) resin composition.

[Resin and copolymer]

[Poly(1-butene) resin]

A poly (1-butene) homopolymer having a melt flow rate (MFR), as measured at 190 °C under a load of 2.16 kg in accordance with JIS K 6721, of 0.5 (g/10 min), a density as measured by a density gradient tube in accordance with JIS K 7112, of 910 (kg/m$^3$) and a melting point of 125 °C was used as the poly (1-butene) resin (PB) . In the poly(1-butene) resin (PB), 0.1 part by mass of Irganox (registered trademark) 1010 (manufacturedbyBASF) was contained as an antioxidant, based on 100 parts by mass of the poly(1-butene) homopolymer.

[Ethylene-based polymer]

As the ethylene-based polymers, polymers described in Table 1 were used. The ethylene-based polymers (B1), (B2), and (b1) to (b3) are as follows.
- Ethylene-based polymer (B1) : EXCEREX (registered trademark) 30200B manufactured by Mitsui Chemicals, Inc.
- Ethylene-based polymer (B2) : EXCEREX (registered trademark) 40800 manufactured by Mitsui Chemicals, Inc. , homopolymer of ethylene
- Ethylene-based polymer (b1): Hi-WAX NL500 manufactured by Mitsui Chemicals, Inc.
- Ethylene-based polymer (b2): Hi-WAX 420P manufactured by Mitsui Chemicals, Inc.
- Ethylene-based polymer (b3): Hi-WAX 400P manufactured by Mitsui Chemicals, Inc., homopolymer of ethylene

[Table 1]

Table 1

| Ethylene-based polymer | Mass-average molecular weight (Mw) | Molecular weight distribution (Mw/Mn) | Density (kg/m³) | Melting point (°C) | Melt viscosity (140°C) (K, mPa·s) | B value | Right side of formula (2) (0.15×K) | A value | Right side of formula (3) (230×K$^{(-0.537)}$) | Ash content (ppm) |
|---|---|---|---|---|---|---|---|---|---|---|
| B1 | 5100 | 2.6 | 915 | 102 | 270 | 2.2 | 2.3 | 9.3 | 11.4 | 30 |
| B2 | 6900 | 2.9 | 980 | 128 | 750 | 4.2 | 4.5 | 7.3 | 6.6 | 40 |
| b1 | 9300 | 3.6 | 920 | 103 | 1040 | 11.1 | 7.8 | 7.4 | 5.5 | - |
| b2 | 6400 | 2.8 | 930 | 112 | 700 | 6.2 | 5.3 | 8.3 | 6.8 | 50 |
| b3 | 6800 | 3.0 | 980 | 128 | 670 | 5.3 | 5.0 | 8.9 | 7.0 | 50 |

[Examples 1 to 5, Comparative Examples 1 to 7]

Poly (1-butene) resin compositions in the form of pellets were each obtained by adding the ethylene-based polymer to the poly (1-butene) resin in a ratio shown in Table 2 and melt blending them by a 40 mm single screw extruder.

The resulting resin compositions were subj ected to the aforesaid evaluation. The results are shown in Table 2 and Figs. 1 and 2.

[Comparative Example 8]

100% by mass of the poly (1-butene) resin (PB) was used as it is, and a half crystallization time ($T_{1/2}$) and a stress at yield (MPa) of the resin were measured in the same manner as in the aforesaid evaluation. The results are shown in Table 2.

[Table 2]

Table 2

| | Poly(1-butene) resin | Ethylene-based polymer | Amount of (B) added | | Half-crystallization time ($T_{1/2}$, sec) | Right side of formula (1) $(0.27 \times W_B - 1.34) \times d - 274 \times W_B + 1389$ | Stress at yield (95°C, MPa) |
|---|---|---|---|---|---|---|---|
| | | | ($W_B$, mass%) | (PHR) | | | |
| Ex. 1 | PB | B1 | 0.498 | 0.5 | 165 | 149 | 8.2 |
| Ex. 2 | PB | B1 | 1.961 | 2 | 127 | 110 | 8.1 |
| Ex. 3 | PB | B2 | 0.200 | 0.2 | 78 | 74 | 8.4 |
| Ex. 4 | PB | B2 | 0.498 | 0.5 | 76 | 71 | 9.2 |
| Ex. 5 | PB | B2 | 1.961 | 2 | 60 | 57 | 9.0 |
| Comp. Ex. 1 | PB | b1 | 0.498 | 0.5 | 140 | 143 | 8.0 |
| Comp. Ex. 2 | PB | b1 | 1.961 | 2 | 104 | 106 | 8.0 |
| Comp. Ex. 3 | PB | b2 | 0.498 | 0.5 | 120 | 131 | 8.2 |
| Comp. Ex. 4 | PB | b2 | 1.961 | 2 | 92 | 98 | 8.1 |
| Comp. Ex. 5 | PB | b3 | 0.200 | 0.2 | 73 | 74 | 8.2 |
| Comp. Ex. 6 | PB | b3 | 0.498 | 0.5 | 65 | 71 | 8.7 |
| Comp. Ex. 7 | PB | b3 | 1.961 | 2 | 54 | 57 | 8.8 |
| Comp. Ex. 8 | PB | - | 0.000 | 0 | 437 | - | 6.3 |

(Comparison between Examples and Comparative Examples)

It can be seen that the resin compositions obtained in Examples each had a long half-crystallization time and the pressed sheets obtained from the compositions each had a high stress at yield.

**Claims**

**1.** A poly(1-butene) resin composition comprising

a poly(1-butene) resin (A) having a melt flow rate, as measured at 190°C under a load of 2.16 kg in accordance with JIS K 6721, of 0.01 to 50 g/10 min, and

an ethylene-based polymer (B) satisfying the following requirements (i) to (iii) and (viii),

the poly(1-butene) resin composition satisfying the following requirements (I) and (II),

(i) a mass-average molecular weight (Mw) as measured by gel permeation chromatography (GPC) is in the range of 3000 to 9000 in terms of polyethylene,

(ii) a ratio (Mw/Mn) of a mass-average molecular weight (Mw) as measured by gel permeation chromatography (GPC) to a number-average molecular weight (Mn) as measured by the same is in the range of 1.0 to 3.5,

(iii) a density d as measured by a density gradient tube method in accordance with JIS K 7112 is in the range of 890 to 980 kg/m$^3$,

(viii) the ethylene-based polymer (B) is a polymer obtained by using a metallocene catalyst,

(I) a content (% by mass) [$W_A$] of the poly(1-butene) resin (A) is 95.000 to 99.999, and a content (% by mass) [$W_B$] of the ethylene-based polymer (B) is 0.001 to 5.000 (with the proviso that the total of $W_A$ and $W_B$ is 100% by mass),

(II) a half-crystallization time $T_{1/2}$ (second(s)) of the poly(1-butene) resin composition at an isothermal crystallization temperature 90°C, as determined by differential scanning calorimeter (DSC) measurement, a density d (kg/m$^3$) of the ethylene-based polymer (B), and a content (% by mass) [$W_B$] of the ethylene-based polymer (B) satisfy a relationship represented by the following formula (1):

$$T_{1/2} > (0.27 \times W_B - 1.34) \times d - 274 \times W_B + 1389 \qquad \text{Formula (1)},$$

wherein the half-crystallization time $T_{1/2}$ is determined by heating 5 mg of a sample of the poly(1-butene) resin composition from room temperature to 200 °C at 320 °C/min by use of a differential scanning calorimeter and taking a time, which is required for the crystallization calories given when the composition is isothermally crystallized at 90°C to reach 1/2 of the total calories, as the half-crystallization time $T_{1/2}$.

2. The poly(1-butene) resin composition according to claim 1, wherein the ethylene-based polymer (B) further satisfies the following requirement (iv):
(iv) a melting point (Tm) as obtained by differential scanning calorimeter (DSC) measurement is in the range of 70 to 130°C.

3. The poly(1-butene) resin composition according to claim 1 or 2, wherein the ethylene-based polymer (B) further satisfies the following requirement (v):
(v) the ethylene-based polymer (B) is a homopolymer of ethylene.

4. The poly(1-butene) resin composition according to any one of claims 1 to 3, wherein the ethylene-based polymer (B) further satisfies the following requirement (vii):
(vii) the ethylene-based polymer (B) satisfies a relationship represented by the following formula (3):

$$A \leq 230 \times K^{(-0.537)} \qquad \text{Formula (3)}$$

(in the formula (3), A represents a content (% by mass), on the mass basis, of a component in the ethylene-based polymer (B), the component having a molecular weight, as measured by gel permeation chromatography (GPC), of not more than 1,000 in terms of polyethylene, and K represents a melt viscosity (mPa·s) of the ethylene-based polymer (B) at 140°C).

5. The poly(1-butene) resin composition according to any one of claims 1 to 4, wherein the ethylene-based polymer (B) further satisfies the following requirement (ix):
(ix) an ash content obtained by completely burning the ethylene-based polymer (B) in air is not more than 45 ppm.

6. The poly(1-butene) resin composition according to any one of claims 1 to 5, wherein the ratio (Mw/Mn) of the mass-average molecular weight to the number-average molecular weight in the requirement (ii) is in the range of 1.2 to 3.5.

7.  A molded body obtained from the poly(1-butene) resin composition according to any one of claims 1 to 6.

8.  The molded body according to claim 7, being a pipe or a pipe joint.


**Patentansprüche**

1.  Poly(1-buten) Harzzusammensetzung, umfassend

    ein Poly(1-buten) Harz (A) mit einer Schmelzflussrate, gemessen bei 190 °C unter einer Belastung von 2,16 kg gemäß JIS K 6721, von 0,01 bis 50 g/10 min, und
    ein Polymer auf Ethylenbasis (B), das die folgenden Bedingungen (i) bis (iii) und (viii) erfüllt,
    wobei die Poly(1-buten) Harzzusammensetzung die folgenden Bedingungen (I) und (II) erfüllt,

    (i) ein gewichtsmittleres Molekulargewicht (Mw), gemessen durch Gelpermeationschromatographie (GPC), liegt im Bereich von 3000 bis 9000 in Bezug auf Polyethylen,
    (ii) ein Verhältnis (Mw/Mn) eines gewichtsmittleren Molekulargewichts (Mw), gemessen durch Gelpermeationschromatographie (GPC), zu einem zahlenmittleren Molekulargewicht (Mn), welches genauso gemessen wird, liegt im Bereich von 1,0 bis 3,5,
    (iii) eine Dichte d, gemessen durch ein Dichtegradientenrohrverfahren gemäß JIS K 7112, liegt im Bereich von 890 bis 980 kg/m$^3$,
    (viii) das Polymer auf Ethylenbasis (B) ist ein Polymer, das durch Verwendung eines Metallocenkatalysators erhältlich ist,

    (I) ein Gehalt (Massen-%) [W$_A$] des Poly(1-buten) Harzes (A) beträgt 95,000 bis 99,999 und ein Gehalt (Massen-%) [W$_B$] des Polymers auf Ethylenbasis (B) beträgt 0,001 bis 5,000 (mit der Maßgabe, dass W$_A$ und W$_B$ insgesamt 100 Massen-% ergeben),
    (II) eine Halbkristallisationszeit T$_{1/2}$ (Sekunde(n)) der Poly(1-buten) Harzzusammensetzung bei einer isothermen Kristallisationstemperatur von 90 °C, bestimmt durch eine dynamische Differenzkalorimetrie (DDK) Messung, eine Dichte d (kg/m$^3$) des Polymers auf Ethylenbasis (B) und ein Gehalt (Massen-%) [W$_B$] des Polymers auf Ethylenbasis (B) erfüllen eine Beziehung der folgenden Formel (1):

    $$T_{1/2} > (0,27 \times W_B - 1,34) \times d - 274 \times W_B + 1389 \quad \text{Formel (1),}$$

    worin die Halbkristallisationszeit T$_{1/2}$ bestimmt wird, indem 5 mg einer Probe der Poly(1-buten) Harzzusammensetzung von Raumtemperatur auf 200 °C bei 320 °C/min unter Verwendung eines dynamischen Differenzkalorimeters erwärmt wird und eine Zeit, die benötigt wird, damit die Kristallisationskalorien, die bei isothermem Kristallisieren der Zusammensetzung bei 90 °C vorliegen, 1/2 der gesamten Kalorien erreichen, als die Halbkristallisationszeit T$_{1/2}$ genommen wird.

2.  Poly(1-buten) Harzzusammensetzung gemäß Anspruch 1, wobei das Polymer auf Ethylenbasis (B) ferner die folgende Bedingung (iv) erfüllt:
    (iv) ein Schmelzpunkt (Tm), erhalten durch dynamische Differenzkalorimetrie (DDK) Messung, liegt im Bereich von 70 bis 130 °C.

3.  Poly(1-buten) Harzzusammensetzung gemäß Anspruch 1 oder 2, wobei das Polymer auf Ethylenbasis (B) ferner die folgende Bedingung (v) erfüllt:
    (v) das Polymer auf Ethylenbasis (B) ist ein Ethylen-Homopolymer.

4.  Poly(1-buten) Harzzusammensetzung gemäß mindestens einem der Ansprüche 1 bis 3, wobei das Polymer auf Ethylenbasis (B) ferner die folgende Bedingung (vii) erfüllt:
    (vii) das Polymer auf Ethylenbasis (B) erfüllt eine Beziehung der folgenden Formel (3):

    $$A \leq 230 \times K^{(-0.537)} \quad \text{Formel (3),}$$

    (in der Formel (3) steht A für ein Gehalt (Massen-%), auf der Gewichtsbasis, einer Komponente in dem Polymer auf Ethylenbasis (B), wobei die Komponente ein Molekulargewicht, gemessen durch Gelpermeationschromatographie (GPC), von nicht mehr als 1.000 in Bezug auf Polyethylen aufweist, und K für eine Schmelzviskosität (mPa·s) des Polymers auf Ethylenbasis (B) bei 140 °C steht).

5. Poly(1-buten) Harzzusammensetzung gemäß mindestens einem der Ansprüche 1 bis 4, wobei das Polymer auf Ethylenbasis (B) ferner die folgende Bedingung (ix) erfüllt:
(ix) ein Aschegehalt, erhalten durch vollständiges Verbrennen des Polymers auf Ethylenbasis (B) an der Luft, beträgt nicht mehr als 45 ppm.

6. Poly(1-buten) Harzzusammensetzung gemäß mindestens einem der Ansprüche 1 bis 5, wobei das Verhältnis (Mw/Mn) des gewichtsmittleren Molekulargewichts zu dem zahlenmittleren Molekulargewicht in der Bedingung (ii) im Bereich von 1,2 bis 3.5 liegt.

7. Formkörper, erhältlich aus der Poly(1-buten) Harzzusammensetzung gemäß mindestens einem der Ansprüche 1 bis 6.

8. Formkörper gemäß Anspruch 7, der ein Rohr oder ein Rohrgelenk ist.

**Revendications**

1. Composition de résine de poly(1-butène) comprenant

une résine de poly(1-butène) (A) présentant un indice de fluidité à chaud, tel que mesurée à 190 °C sous une charge de 2,16 kg selon la norme JIS K 6721, de 0,01 à 50 g/10 min, et
un polymère à base d'éthylène (B) satisfaisant aux exigences (i) à (iii) et (viii) suivantes,
la composition de résine de poly(1-butène) satisfaisant aux exigences (I) et (II) suivantes,

(i) un poids moléculaire moyen en masse (Mw) tel que mesuré par chromatographie par perméation de gel (CPG) est dans la plage de 3 000 à 9 000 pour ce qui est du polyéthylène,
(ii) un rapport (Mw/Mn) entre un poids moléculaire moyen en masse (Mw) tel que mesuré par chromatographie par perméation de gel (CPG) et un poids moléculaire moyen en nombre (Mn) tel que mesuré de la même manière est dans la plage de 1,0 à 3,5,
(iii) une densité d telle que mesurée par un procédé de tube à gradient de densité selon la norme JIS K 7112 est dans la plage de 890 à 980 kg/m$^3$,
(viii) le polymère à base d'éthylène (B) est un polymère obtenu par utilisation d'un catalyseur métallocène,

(I) une teneur (% en masse) [$W_A$] de la résine de poly(1-butène) (A) est de 95,000 à 99,999, et une teneur (% en masse) [$W_B$] du polymère à base d'éthylène (B) est de 0,001 à 5,000 ( à condition que le total de $W_A$ et $W_B$ soit de 100 % en masse),
(II) un temps de demi-cristallisation $T_{1/2}$ (seconde(s)) de la composition de résine de poly(1-butène) à une température de cristallisation isotherme de 90 °C, tel que déterminé par une mesure par analyse calorimétrique différentielle (ACD), une densité d (kg/m$^3$) du polymère à base d'éthylène (B), et une teneur (% en masse) [$W_B$] du polymère à base d'éthylène (B) satisfont à une relation représentée par la formule (1) suivante :

$$T_{1/2}>(0,27xW_B-1,34)xd-274xW_B+1\ 389 \quad \text{Formule (1)}$$

dans laquelle le temps de demi-cristallisation $T_{1/2}$ est déterminé par chauffage de 5 mg d'un échantillon de la composition de résine de poly(1-butène) de la température ambiante à 200 °C à 320°C/min en utilisant une analyse calorimétrique différentielle et en laissant s'écouler un certain temps, qui est nécessaire pour que les calories de cristallisation données lorsque la composition est cristallisée isothermiquement à 90 °C atteignent ½ des calories totales, en tant que temps de demi-cristallisation $T_{1/2}$.

2. Composition de résine de poly(1-butène) selon la revendication 1, dans laquelle le polymère à base d'éthylène (B) satisfait en outre à l'exigence (iv) suivante :
(iv) un point de fusion (Tm) tel qu'obtenu par mesure par analyse calorimétrique différentielle (ACD) est dans la plage de 70 à 130 °C.

3. Composition de résine de poly(1-butène) selon la revendication 1 ou 2, dans laquelle le polymère à base d'éthylène (B) satisfait en outre à l'exigence (v) suivante :
(v) le polymère à base d'éthylène (B) est un homopolymère d'éthylène.

4. Composition de résine de poly(1-butène) selon l'une quelconque des revendications 1 à 3, dans laquelle le polymère à base d'éthylène (B) satisfait en outre à l'exigence (vii) suivante :
(vii) le polymère à base d'éthylène (B) satisfait à une relation représentée par la formule (3) suivante :

$$A \leq 230 \times K^{(-0,537)} \qquad \text{Formule (3)}$$

(dans la formule (3), A représente une teneur (% en masse), sur la base de la masse, en un constituant dans le polymère à base d'éthylène (B), le constituant présentant un poids moléculaire, tel que mesuré par chromatographie par perméation de gel (CPG), ne dépassant pas les 1000 pour ce qui est du polyéthylène, et K représente une viscosité à chaud (mPa·s) du polymère à base d'éthylène (B) à 140 °C).

5. Composition de résine de poly(1-butène) selon l'une quelconque des revendications 1 à 4, dans laquelle le polymère à base d'éthylène (B) satisfait en outre à l'exigence (ix) suivante :
(ix) une teneur en cendres obtenue pas combustion totale du polymère à base d'éthylène (B) dans l'air ne dépasse pas les 45 ppm.

6. Composition de résine de poly(1-butène) selon l'une quelconque des revendications 1 à 5, dans laquelle le rapport (Mw/Mn) entre le poids moléculaire moyen en masse et le poids moléculaire moyen en nombre dans l'exigence (ii) est dans la plage de 1,2 à 3,5.

7. Corps moulé obtenu à partir de la composition de résine de poly(1-butène) selon l'une quelconque des revendications 1 à 6.

8. Corps moulé selon la revendication 7, étant un tuyau ou un joint d'étanchéité de tuyau.

[Fig. 1]

EP 3 287 488 B1

[Fig. 2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007186563 A
- EP 1125981 A1
- WO 0202659 A
- JP 8239414 A
- WO 2007114102 A

**Non-patent literature cited in the description**

- *J. Polym. Sci.,* 1970, vol. 8, 1803
- *Makromol. Chem.,* 1976, vol. 177, 213